# EUROPÄISCHE PATENTSCHRIFT

(11) **EP 0 301 390 B1**
(45) Veröffentlichungstag und Bekanntmachung des Hinweises auf die Patenterteilung: **24.03.1993**
(21) Anmeldenummer: 88111633.9
(22) Anmeldetag: 20.07.1988
(51) Int. Cl.: G01B 7/00, G01B 11/00

(54) **Tastkopf für Koordinatenmessgeräte**
Feeler head for coordinate measuring machines
Palpeur pour des appareils de mesure de coordonnées

(30) Priorität: 30.07.1987 DE 3725205
(43) Veröffentlichungstag der Anmeldung: 01.02.1989
(73) Patentinhaber: Firma Carl Zeiss, D-73446 Oberkochen (DE); CARL-ZEISS-STIFTUNG, HANDELND ALS CARL ZEISS, 73446 Oberkochen (DE)
(72) Erfinder: Herzog, Klaus, D-7082 Oberkochen (DE); Breyer, Karl-Hermann, Dr., D-7920 Heidenheim (DE); Szenger, Franz, D-7923 Königsbronn (DE)

(56) Entgegenhaltungen:
- EP-A- 0 025 485
- DE-A- 2 835 615
- DE-A- 3 210 711
- DE-B- 2 242 355
- DE-B- 2 718 506
- DE-C- 2 712 181
- MESSEN + PRUEFEN / AUTOMATIK, Januar/Februar 1984, Seiten 40-45, Hannover, D; H. Janocha: "Mikrorechner erhöht Universalität und Flexibilität eines dynamischen Koordinaten-Messtasters"

## Beschreibung

Die vorliegende Erfindung betrifft einen Tastkopf für Koordinatenmeßgeräte mit einem ein räumliches Koordinatensystem definierenden, torsionssteifen, spiel- und reibungsfreiem Federsystem, das einen in allen drei Raumrichtungen auslenkbaren Taststift trägt.

Koordinatenmeßgeräte dienen dazu die Raumkoordinaten eines Werkstücks an vorgewählten Stellen hochgenau zu erfassen, zur Anzeige zu bringen und/oder einem nachgeschaltetem Rechner zuzuleiten. Dieser Rechner ermittelt aus den Koordinatenwerten die gesuchten Maße des Werkstücks.

Um diese Meßaufgabe lösen zu können ist ein Tastkopf vorgesehen, der mit einem Taststift versehen ist und der mittels eines Gerätes in allen drei Raumrichtungen bewegbar ist, wobei durch Meßwertgeber, die mit diesem Gerät verbunden sind, die Raumkoordinaten des Taststifts in jedem Augenblick bekannt sind. Das Gerät zur Tastkopfbewegung kann manuell betätigt werden, im allgemeinen sind jedoch motorisch verschiebbare Schlitten vorgesehen, die eine gesteuerte dreidimensionale Verschiebung des Tastkopfes bewirken. Ein solches Koordinatenmeßgerät ist beispielsweise aus der DE-PS 27 18 506 bekannt.

Der Tastkopf selbst hat die Aufgabe die Raumkoordinaten festzuhalten sobald die Spitze des mit ihm verbundenen Taststifts das zu vermessende Werkstück berührt. Diese Koordinatenwerte werden dann einer Auswerteeinheit zugeführt, die aus den an verschiedenen Antaststellen ermittelten Koordinatenwerten die gesuchten Maße des Werkstücks errechnet.

Der Tastkopf selbst muß so ausgebildet sein, daß eine Antastung des Werkstücks und die damit verbundene Koordinatenmessung aus allen drei Raumrichtungen möglich ist. Da bei einem Antastvorgang der Bewegungsmechanismus für den Tastkopf nicht im Augenblick der Berührung der Taststiftspitze mit dem Werkstück zum Stehen gebracht werden kann, ist es erforderlich den Taststift im Tastkopf so zu halten, daß er in allen Antastrichtungen, d.h. in allen drei Raumkoordinaten auslenkbar ist.

Es sind eine ganze Reihe von Tastköpfen bekannt, die sich durch die Art unterscheiden lassen wie die beim Antastvorgang vorliegenden Werte der Raumkoordinaten ermittelt werden. Im allgemeinen unterscheidet man zwei Kategorien, nämlich die schaltenden und die messenden Tastköpfe.

In die erste Kategorie der sogenannten schaltenden Tastköpfe gehören solche, die bei der ersten Berührung der Tastkopfspitze mit dem Meßobjekt einen Trigger-Impuls auslösen, der die in diesem Augenblick geltenden Koordinatenwerte festhält.

Ein solcher Tastkopf ist beispielsweise aus der DE-PS 27 12 181 bekannt. Er weist ein Lager auf, das die Null-Position des Taststifts hochgenau festlegt und in das der Taststift nach jeder Auslenkung zwangsweise wieder hineinbewegt wird. Zur Erfassung des Trigger-Impulses im Augenblick der Antastung des Meßobjekts ist ein hochempfindlicher Sensor, beispielsweise ein piezoelektrisches Element mit dem Taststift verbunden.

Beim Antastvorgang wird der Tastkopf mittels des Koordinatenmeßgerätes solange auf das zu vermessende Werkstück hin bewegt, bis die Tastkopfspitze das Werkstück berührt, wobei der Sensor den Trigger-Impuls auslöst. Dieser friert die Koordinatenwerte im Augenblick der Antastung ein. Der Tastkopf bewegt sich zunächst weiter, wobei der Taststift aus seiner Null-Position ausgelenkt wird. Diese Auslenkung löst über elektrische oder optische Mittel einen Impuls aus, der den Trigger-Impuls verifiziert, d.h. die von diesem festgehaltenen Koordinatenwerte zum Rechner gibt und der zugleich den Abbremsvorgang des Koordinatenmeßgerätes auslöst. Dabei kommt der Tastkopf zum Stehen, die Bewegung des Meßgerätes kehrt sich um und bewegt den Tastkopf solange zurück bis der Taststift in die Null-Position einrastet. Das Meßgerät ist dann für den nächsten Antastvorgang bereit.

Ein solcher schaltender Tastkopf ist relativ preiswert und ist weitgehend gerätekompatibel, da die Meßwerterfassung im Augenblick des Erstkontaktes zwischen Taststift und Meßobjekt erfolgt.

In die zweite Kategorie gehören die sogenannten messenden Tastköpfe. Diese bestehen beispielsweise aus einer torsionssteifen Aneinanderreihung von spiel- und reibungsreien Geradführungssystemen, die miteinander ein räumliches Koordinatensystem bilden und den Taststift tragen. In die Geradführungssysteme, die vorzugweise als Federparallelogramme ausgebildet sind, sind richtungs- und lageempfindliche Signalgeber eingebaut, die bei einer Auslenkung des Taststifts aus einer Null-Position Signale liefern. Diese Signalgeber sind in einem Lageregelkreis so integriert, daß vom Zeitpunkt des Erstkontaktes zwischen Tasterspitze und Meßobjekt an sowohl die Bewegungssteuerung des Koordinatenmeßgerätes als auch, beim Erreichen eines tasterinternen definierten Schaltpunktes, die Meßwertübernahme initiiert wird.

Ein solcher messender Tastkopf ist beispielsweise aus der DE-PS 22 42 355 bekannt.

Der Lageregelkreis kann so ausgebildet sein, daß der Tastkopf nach jedem Antastvorgang gesteuert in seine Null-Position oder in eine Ausgangs-Position zurückgeführt wird, in der eine voreingestellte Meßkraft erreicht wird. Außerdem sind zu diesem Zeitpunkt die beim Antast-Stoßvorgang erregten Schwingungen abgeklungen.

Es ist auch möglich den Lageregelkreis so auszubilden, daß auf eine Nullpositions-Rückführung verzichtet wird und die Lagesignale im Rechner mit den Koordinaten-Signalen des Koordinatenmeßgerätes verknüpft werden. Dies ermöglicht das kontinuierliche Abtasten eines Meßobjekts längs einer vorgegebenen Linie, d.h. das sogenannte Scannen. Dabei werden die tatsächlichen Koordinaten des Meßobjekts in jedem Punkt rechnerisch ermittelt.

Die beschriebenen messenden Tastköpfe sind aufgrund des erforderlichen hohen mechanischen und elektronischen Aufwandes teuer. Sie sind im allgemeinen auch nicht gerätekompatibel, und nicht einfach zu handhaben.

Die beiden besprochenen Tastkopfsysteme weisen jeweils charakteristische Vor- und Nachteile auf und finden deshalb im industriellen Einsatz auch für unterschiedliche Meßaufgaben Verwendung. Es ist deshalb der Wunsch nach einem Tastsystem entstanden, das sowohl den messenden als auch den schaltenden Betrieb zuläßt. Eine erste Lösung für ein solches Tastsystem ist in der DE-PS 28 35 615 beschrieben. Bei dem dort beschriebenen und dargestellten Tastkopf ist mit dem Taststift eine Lichtquelle verbunden, deren Lichtbündel die Taststiftachse verlängert. Dieses Lichtbündel fällt auf eine positionsempfindliche Fotodiode, so daß mittels der von dieser erzeugten Analogsignale die Tastauslenkung im Sinne eines messenden Tastkopfes gemessen werden kann. Diese Messung ist allerdings nur in einer Ebene, d.h. in zwei Koordinatenrichtungen möglich und ist zudem nicht mit der bei heutigen Koordinatenmeßgeräten erreichbaren Genauigkeit durchzuführen. In der Zeitschrift "Messen und Prüfen / Automatik" Jan./Feb. 1984, Seiten 40/45 ist beschrieben, daß der aus der DE-PS 28 35 615 bekannte Taster auch als schaltender Taster eingesetzt werden kann. Aus dem Abschnitt 3.3.2 auf Seite 43 geht hervor, daß dazu im tastereigenen Koordinatensystem um dessen Ursprung ein Koinzidenzkreis definiert wird, der einen konstanten Wert der Auslenkung der Taststiftspitze definiert. Ein Mikrorechner prüft ständig in kurzen Zeitabständen, ob die Tasterachse die Peripherie dieses Kreises durchstößt. Ist dies der Fall, so werden die Antast-Koordinaten übernommen.

Dieser bekannte Taster ist nur zur zweidimensionalen Abtastung eines Meßobjektes geeignet und erfordert einen relativ hohen elektronischen Aufwand.

Es ist nun die Aufgabe der vorliegenden Erfindung einen Tastkopf für Koordinatenmeßgeräte nach dem Oberbegriff des Patentanspruchs 1 so auszubilden, daß er universell, d.h. als schaltender und messender Tastkopf einsetzbar ist und sich durch einen relativ geringen mechanischen und elektronischen Aufwand auszeichnet.

Die Lösung dieser Aufgabe erfolgt durch die Ausbildung des Tastkopfs nach dem kennzeichnenden Merkmal der Ansprüche 1, 4 oder 5, d.h. der Tastkopf nach der Erfindung zeichnet sich durch eine Kombination der Merkmale a - d in den genannten Ansprüchen 1, 4 oder 5 aus.

Die durch die Erfindung erreichten Vorteile sind im wesentlichen darin zu sehen, daß der Tastkopf universell, d.h. sowohl als schaltender als auch als messender Tastkopf einsetzbar ist ohne daß auf die mit den speziellen Tastköpfen nach dem Stand der Technik erreichbare Meßgenauigkeit verzichtet werden muß.

Weitere vorteilhafte Ausgestaltungen des Tastkopfs nach der Erfindung ergeben sich aus den abhängigen Ansprüchen.

Die Erfindung wird im folgenden anhand der Ausführungsbeispiele darstellenden Figuren 1 - 5 näher erläutert. Im einzelnen zeigen:
- Fig. 1: ein Ausführungsbeispiel für das Federsystem des Tastkopfs, wobei aus Gründen der Übersichtlichkeit die Signalerzeugungsmittel nicht dargestellt sind;
- Fig. 2: ein Ausführungsbeispiel eines Tastkopfs nach der Erfindung, in das auch die Signalerzeugungsmittel eingezeichnet sind;
- Fig. 3: die dem Taster nachgeschaltete Elektronik in schematischer Darstellung;
- Fig. 4: ein Ausführungsbeispiel für einen opto-elektronischen Null-Indikator;
- Fig. 5: ein Ausführungsbeispiel für den Taststift (14) aus Figur 2.

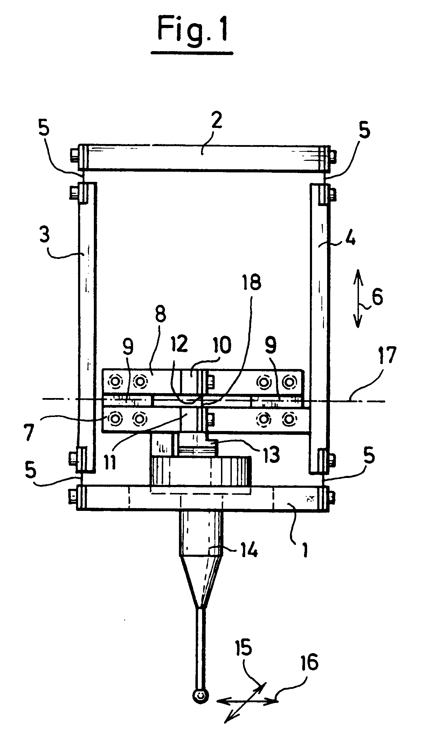

In Fig. 1 ist ein Federparallelogramm dargestellt, das aus den Seitenteilen (1 bis 4) besteht, die durch Blattfedern (5) miteinander verbunden sind. Anstelle der Blattfedern können auch Kreuzfedergelenke vorgesehen sein, die aus zwei rechtwinklig zueinander angeordneten Blattfedern bestehen. Das Seitenteil (3) ist fest mit dem Koordinatenmeßgerät verbunden, während das Seitenteil (4) im Sinne des Pfeiles (6) auslenkbar ist.

Mit dem Seitenteil (4) ist ein Träger (7) fest verbunden, welcher über Blattfedern (9) mit einem weiteren Träger (8) den ersten Teil eines Kardangelenks bildet. Senkrecht zu den Trägern (7 und 8) sind zwei weitere Träger (10 und 11) angeordnet, wobei die Träger (8 und 10) starr miteinander verbunden sind und ein Kreuz bilden. Die unteren Träger (7 und 11) sind jeweils mit einer Ausnehmung versehen, welche eine Relativbewegung dieser Träger ermöglicht. Die beiden Träger (10 und 11) sind über Blattfedern miteinander verbunden, wobei in Fig. 1 nur eine dieser Federn sichtbar ist. Mit dem unteren Träger (11) ist über ein Bauteil (13) ein Taststift (14) fest verbunden, wobei der Taststift (14) durch eine kreisförmige Ausnehmung der Platte (1) so hindurchragt, daß er im Sinne der Pfeile (15 und 16) frei beweglich ist.

Beim Bewegen im Sinne des Pfeiles (15) wird der Taststift (14) um die Achse (17) geschwenkt, welche durch die Elemente (7,8,9) gebildet ist. Eine Bewegung des Taststifts (14) im Sinne des Pfeiles (16) ist durch das System (10,11,12) ermöglicht, welches eine weitere Drehachse bildet, welche senkrecht zur Achse (17) verläuft und sich mit dieser im Punkt (18) schneidet.

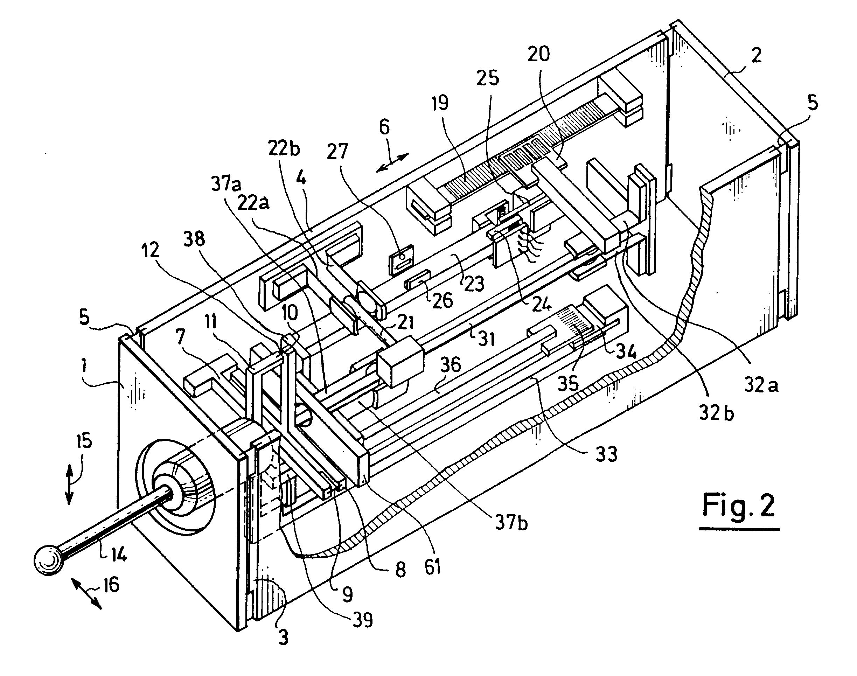

Fig. 2 zeigt einen Tastkopf, welcher die in Fig. 1 dargestellten Federsysteme beinhaltet, wobei auch die tasterinternen Wegmeß- und Dämpfungssysteme dargestellt sind. Dieser Taster wird üblicherweise in vertikaler Position mit dem Koordinatenmeßgerät verbunden, so daß die mit dem Pfeil dargestellte Bewegungsrichtung (6) der z-Koordinate entspricht. In diesem Fall ist das Federparallelogramm (1 - 5) mit einer Gewichtsentlastung versehen, wie sie beispielsweise aus der DE-PS 22 42 355 bekannt ist.

Mit der gerätefesten Seitenplatte (3) ist ein Abtastgitter (20) fest verbunden, welches mit einem Meßgitter (19) zusammenwirkt, das mit der in z-Richtung verschiebbaren Seitenplatte (4) fest verbunden ist. Die beiden Gitter (19 und 20) bilden ein inkrementales Wegmeßsystem.

Mit der maschinenfesten Seitenplatte (3) ist ferner ein Stab (21) fest verbunden, welcher zwischen einem Federsystem (22) gelagert ist, welches mit der verschiebbaren Platte (4) in Verbindung steht. Das Federsystem (22) dient dazu, die Bewegung in z-Richtung zu dämpfen und in dieser Richtung einen vorgegebenen Anpreßdruck des Tasters (14) an das Meßobjekt zu gewährleisten. Das Federsystem (22) ist dabei vorteilhaft so ausgebildet, daß es ab einem gewissen Grenzwert der Auslenkung eine abfallende Kraft-Weg-Kennlinie aufweisen. Damit werden bei größeren Auslenkungen des Taststifts (14) in z-Richtung schädlich hohe Anpressdrucke vermieden.

Das, aus den Elementen (7,8,9) bestehende Federgelenk, welches eine Bewegung des Taststifts (14) in Richtung des Doppelpfeils (15) ermöglicht, ist über den Träger (7) fest mit der in z-Richtung verschiebbaren Seitenplatte (4) verbunden. Der Träger (8) dieses Federgelenks ist mit dem Träger (10) fest verbunden und bildet ein Kreuz. Mit dem Träger (10) ist ein Tragarm (23) fest verbunden, welcher ein Abtastgitter (24) trägt. Dieses wirkt mit einem Meßgitter (25) zusammen, welches fest mit der Platte (4) verbunden ist. Die beiden Gitter (24 und 25) bilden wieder ein inkrementales Wegmeßsystem, das bei einer Bewegung des Taststifts (14) in Richtung des Pfeiles (15) und der damit verbunden Bewegung des Tragarmes (23) in Richtung (15) anspricht.

Mit dem Tragarm (23) ist ein Teil (26) fest verbunden, welcher mit einem weiteren Teil (27) zusammenwirkt, der fest mit der Seitenplatte (4) in Verbindung steht. Die Teile (26 und 27) bilden einen Null-Indikator, dessen Wirkungsweise anhand der Fig. 2 erläutert werden soll. Wie aus dieser Figur hervorgeht ist das Teil (26) mit einer Zylinderlinse (28) versehen, während das Teil (27) eine Leuchtdiode (29) und eine Differentialdiode (30) trägt. Das von der Leuchtdiode (29) ausgehende Licht wird über die Zylinderlinse (28), deren plane Rückfläche verspiegelt ist, in einen linienförmigen Fokus abgebildet, welcher auf der Differenzdiode (30) liegt. Diese Differenzdiode ist so ausgebildet, daß sie eine Auslenkung der Fokuslinie aus der durch die Diode selbst gegebenen Null-Position hochempfindlich sensiert.

Aus Gründen der Übersichtlichkeit sind Null-Indikatoren für die übrigen Koordinatenrichtungen in Fig. 2 nicht dargestellt. Es muß jedoch betont werden, daß jedes einzelne inkrementale Wegmeßsystem mit einem Null-Indikator versehen ist.

Mit dem Träger (8) des Federgelenks (7 - 9) ist ein Stab (31) fest verbunden, welcher mit einem Federsystem (32) zusammenwirkt. Dieses Zusammenwirken erfolgt ebenso wie das Zusammenwirken des Stiftes (21) mit dem Federsystem (22) und gewährleistet damit einen vorbestimmten Anpreßdruck des Taststiftes (14) in Richtung (15).

Das Federgelenk (10,11,12) ermöglicht ein Bewegen des Taststiftes (14) in Richtung des Pfeiles (16). Mit dem Träger (11) des Federgelenks ist einmal der Taststift (14) und zum anderen ein Trägerarm (33) fest verbunden, welcher ein Meßgitter (34) trägt. Dieses Meßgitter wirkt mit einem Abtastgitter (35) zusammen, welches auf einem Tragarm (36) angeordnet ist, der mechanisch starr mit dem Träger (8) des Federgelenks (7 - 9) verbunden ist. Beim Verschwenken des Taststiftes (14) in Richtung des Pfeiles (15) wird das Gitter (34) relativ zu dem bei dieser Bewegung feststehenden Gitter (35) verschoben und es werden inkrementale Wegmeß-Signale erzeugt.

Zur Dämpfung des Federgelenks (10 - 12) ist mit dem Arm (10) ein Federsystem (37) verbunden, welches mit dem Stift (31) zusammenwirkt, welcher fest mit dem Federgelenk (7 - 9) verbunden ist.

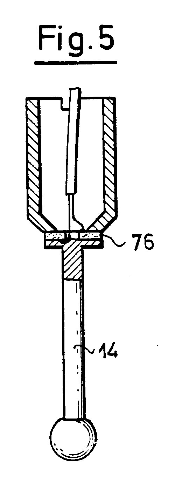

Der Taststift (14) ist auswechselbar am Arm (11) des Federgelenkes (10 - 12) befestigt. Er kann beispielsweise als starrer Stift ausgebildet sein, welcher einen hochempfindlichen Sensor 76) trägt, der bei der ersten Berührung der Tastkopfspitze mit dem Meßobjekt einen Trigger-Impuls auslöst (Fig. 5). Dabei ist es von ganz besonderem Vorteil diesen Sensor in möglichst unmittelbarer Nähe der Tastkopfspitze anzuordnen um irgendwelche Laufzeiteffekte weitgehend zu eliminieren.

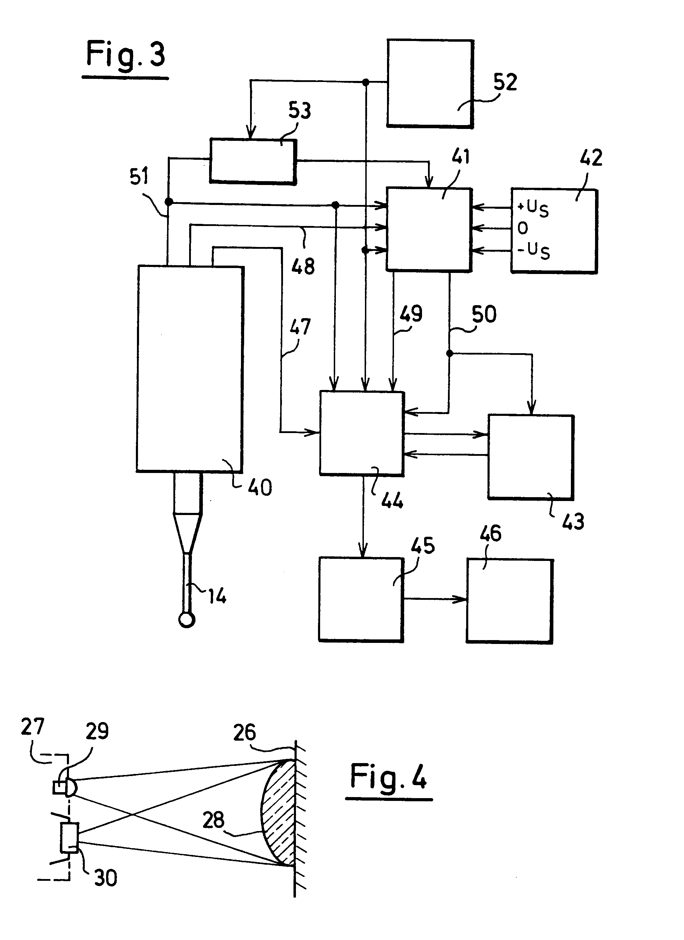

In der in Fig. 3 dargestellten Schema-Schaltung ist mit (41) eim Komparator bezeichnet, welchem über eine Schaltung (42) drei Schwellwertsignale zugeführt sind. Dadurch wird bewirkt, daß der Komparator (41) bei drei Stufen schaltet, welche beispielsweise als -U_{S}, 0 und +U_{S} bezeichnet werden sollen.

Mit (43) ist ein Koordinatenmeßgerät bezeichnet, welches in jedem Augenblick Koordinatensignale erzeugt, welche den Raumkoordinaten der Spitze des Taststiftes (14) des Tastkopfes (40) entsprechen. Diese Koordinatensignale werden einem Speicher (44) zugeleitet, dem ein Rechner (45) mit nachgeschalteter Anzeigeeinheit (46) nachgeordnet ist.

Im folgenden soll der Einsatz des Tastkopfes (40) als schaltender Taster beschrieben werden. Der Tastkopf (40) entspricht in seinem Aufbau der Fig. 2, wobei der Taststift (14) mit einem Sensor versehen ist, der im Augenblick des Antastens des Meßobjektes einen Trigger-Impuls liefert, welcher über die Leitung (47) dem Speicher (44) zugeführt wird. Dieser Trigger-Impuls friert die im Augenblick seines Auftretens vom Koordinatenmeßgerät (43) gelieferten Koordinatensignale ein. Der Antastvorgang selbst wird weitergeführt, so daß der Taststift (14) aus seiner Null-Position ausgelenkt wird. Die Null-Indikatoren (26,27), die in jedem Wegmeßsystems des Tastkopfes (40) vorgesehen sind, liefern dabei über die Leitung (48) ein Signal zum Komparator (41). Sobald dieses Signal einen voreingestellten Schwellwert ± U_{S} überschreitet, liefert der Komparator (41) über die Leitung (49) ein Auslösesignal zum Speicher (44), welches diesen veranlaßt, die im Augenblick des Auftretens des Trigger-Impulses festgehaltenen Koordinatenwerte zum Rechner (45) weiterzuleiten.

Zwischen dem Trigger-Impuls und dem Auslösesignal vom Komparator (41) muß ein vorbestimmter zeitlicher Abstand bestehen. Nur wenn dieser Abstand erreicht oder überschritten wird, liegt eine korrekte Antastung vor. Das Auslösesignal dient also zur Verifikation des Trigger-Impulses. An die Genauigkeit der Null-Indikatoren werden dabei nur begrenzte Anforderungen gestellt; die Genauigkeit des Null-Impulses muß besser sein als die Teilung des inkrementalen Meßsystems.

Der Komparator (41) leitet das Auslösesignal auch dem Koordinatenmeßgerät (43) zu, welches dieses veranlaßt die Antastbewegung abzubremsen.

Es ist auch möglich, den Tastkopf (40) so aufzubauen, daß der Betrieb als schaltender Taster allein durch eine Kombination von hochgenauen Null-Indikatoren (26,27), Komparator (41) und den inkrementalen Wegmeßsystemen (24,25;19,20;34,35) erfolgt. In diesem Fall ist der Taststift (14) nicht mit einem Sensor versehen. Beim Antasten eines Meßobjekts weicht zumindest einer der Null-Indikatoren (26,27) aus seiner Nullstellung aus, d.h. über die Leitung (48) werden Signale zum Komparator (41) geleitet. Sobald ein Signal die Grenzwerte +U_{S} oder -U_{S} überschreitet löst die Anstiegsflanke des vom Komparator erzeugten Schaltimpulses einen Trigger-Impuls aus, der dem Speicher (44) zugeleitet wird und dort die Koordinatenwerte einfriert. Die Genauigkeit der Konstanz der Meßkraft und damit die Gesamtgenauigkeit wird in diesem Fall von der Genauigkeit der Null-Indikatoren (26,27) bestimmt.

Das Signal zur Verifikation des Trigger-Impulses wird im beschriebenen Fall zweckmäßig von den Wegmeßsystemen abgeleitet.

Bei einer weiteren Ausführungsform des Tastkopfs (40) wird wieder ein Taststift (14) ohne Sensor verwendet. Die von den Wegmeßsystemen erzeugten Signale werden on-line erfaßt, so daß die momentale Lage der Taststiftspitze jederzeit bekannt ist. Wenn sich die Lage dieser Spitze plötzlich ändert, so liegt eine Antastung vor. Zur Ableitung des Trigger-Impulses wird ein Beschleunigungsmesser (53) verwendet, der bei Überschreiten eines eingestellten Grenzwertes dv/dt einen Trigger-Impuls liefert. Das Signal zur Verifikation dieses Trigger-Impulses wird wieder zweckmäßig von den Wegmeßsystemen abgeleitet.

Im folgenden soll der Einsatz des Tastkopfes nach der Erfindung als messender Tastkopf beschrieben werden. In diesem Falle wird ein über die Leitung (47) gelieferte Trigger-Impuls zwar dem Speicher (44) zugeführt, löst dort jedoch keine weitere Funktion aus. Die Signale der Null-Indikatoren werden über die Leitung (48) dem Komparator (41) zugeführt, während gleichzeitig die Signale der Wegmeßsysteme (19,20;24,25;34,35) über die Leitung (51) dem Speicher (44) zugeführt werden. Sobald der Komparator (41) feststellt, daß die über der Leitung (48) anliegenden Signale der Null-Indikatoren (26,27) den voreingestellten Schwellwert ± U_{S} überschreiten, gibt er ein Signal über die Leitung (49) zum Speicher (44).

In einer ersten Betriebsweise gibt der Speicher (44) beim Eintreffen des Komparator-Signales über die Leitung (49) ein Signal zum Koordinatenmeßgerät (43), welches dieses veranlaßt den Antastvorgang abzubremsen und wieder in die Ausgangsposition zurückzulaufen. Sobald diese erreicht ist und vom Komparator (41) über ein entsprechendes Signal über die Leitung (50) angezeigt wird, wird das in diesem Augenblick, d.h. in der Null-Position anliegende Signal vom Koordinaten-Meßgerät (43) über den Speicher (44) dem Rechner (45) zugeleitet. In diesem Moment liegt also über die Leitungen (48 und 51) jeweils Null-Signal an.

In einer weiteren Betriebsart entfällt das Einregeln auf die Null-Position. Der Meßwert wird direkt nach Einleiten des Abbremsvorganges bestimmt.

In einer weiteren Betriebsweise gibt der Speicher (44) im Augenblick des Eintreffens des Auslöseimpulses vom Komparator (41) sowohl die in diesem Moment vom Koordinatenmeßgerät (43) gelieferten Koordinaten-Meßsignale als auch die Signale der Wegmeßsysteme des Tastkopfes (40) zum Rechner (45). Dieser rechnet daraus den tatsächlichen Koordinatenwert. In dieser Betriebsweise kann der Tastkopf (40) ein Meßobjekt entlang einer vorbestimmten Linie abscannen, wobei die Auslöseimpulse kontinuierlich von der Weg-Steuerung ausgelöst werden. Mit (52) ist in der Darstellung der Fig. 3 schematisch ein System bezeichnet, mit dessen Hilfe die Funktionen des Komparators (41), des Speichers (44) und gegebenenfalls auch des Rechners (45) zwischen den einzelnen Betriebsarten des Tastkopfes (40) umgeschaltet werden.

Die Schaltelemente der Fig. 3 sind handelsüblich, so daß also der Aufbau der Schaltung keine Probleme bereitet.

## Patentansprüche

1. Tastkopf für Koordinatenmeßgeräte mit einem ein räumliches Koordinatensystem definierenden torsionssteifen, spiel- und reibungsfreien Federsystem (1-12), das einen in allen drei Raumrichtungen auslenkbaren Taststift (14) trägt, gekennzeichnet durch die Kombination folgender Merkmale
a) im Tastkopf (40) ist für jede der drei Koordinatenrichtungen (x,y,z) ein Wegmeßsystem (34,35;24,25;19,20) vorhanden, mit dem Signale erzeugbar sind, die der Auslenkung in der jeweiligen Koordinatenrichtung proportional sind;
b) mit jedem Wegmeßsystem ist ein Null-Indikator (26,27) zur Erkennung der Null-Lage des Systems verbunden;
c) es ist ein zusätzlicher hochempfindlicher Sensor (76) vorhanden, mit dem bei der ersten Berührung zwischen Meßobjekt und Taststift (14) einen Trigger-Impuls erzeugbar ist;
d) es ist ein System (52) zur Umschaltung des Tastkopfes (40) zwischen schaltender und messender Betriebsart vorhanden.

2. Tastkopf nach Anspruch 1, dadurch gekennzeichnet, daß der Sensor zur Auslösung des Trigger-Impulses direkt mit dem Taststift (14) verbunden ist.

3. Tastkopf nach Anspruch 2, dadurch gekennzeichnet, daß der Sensor in der Nähe der Tastkopf-Spitze angeordnet ist.

4. Tastkopf für Koordinatenmeßgeräte mit einem, ein räumliches Koordinatensystem definierenden torsionssteifen, spiel- und reibungsfreien Federsystem (1-12), das einen in allen drei Raumrichtungen auslenkbaren Taststift (14) trägt, gekennzeichnet durch die Kombination folgender Merkmale
a) im Tastkopf (40) ist für jede der drei Koordinatenrichtungen (x,y,z) ein Wegmeßsystem (34,35;24,25;19,20) vorhanden, mit dem Signale erzeugbar sind, die der Auslenkung in der jeweiligen Koordinatenrichtung proportional sind;
b) mit jedem Wegmeßsystem ist ein Null-Indikator (26,27) zur Erkennung der Null-Lage des Systems verbunden;
c₁) es ist ein Komparator vorhanden, dem die Signale der Null-Indikatoren zugeführt sind, und mit dem bei Berührung zwischen Meßobjekt und Taststift einen Trigger-Impuls auslösbar ist;
c₂) von den Wegmeßsystemen ist ein Signal zur Verifikation des Trigger-Impulses abgeleitet;
d) es ist ein System (52) zur Umschaltung des Tastkopfes (40) zwischen schaltender und messender Betriebsart vorhanden.

5. Tastkopf für Koordinatenmeßgeräte mit einem, ein räumliches Koordinatensystem definierenden torsionssteifen, spiel- und reibungsfreien Federsystem (1-12), das einen in allen drei Raumrichtungen auslenkbaren Taststift (14) trägt, gekennzeichnet durch die Kombination folgender Merkmale
a) im Tastkopf (40) ist für jede der drei Koordinatenrichtungen (x,y,z) ein Wegmeßsystem (34,35;24,25;19,20) vorhanden, mit dem Signale erzeugbar sind, die der Auslenkung in der jeweiligen Koordinatenrichtung proportional sind;
b) mit jedem Wegmeßsystem ist ein Null-Indikator (26,27) zur Erkennung der Null-Lage des Systems verbunden;
c) es ist zusätzlich eine Einrichtung (53) zur Messung der Beschleunigung des Taststifts vorhanden, der die Signale der Wegmeßsysteme (19, 20; 24; 25; 34, 35) zugeführt sind und mit der bei Überschreiten eines vorgewählten dv/dt-Wertes bei Berührung zwischen Meßobjekt und Taststift (14) einen Trigger-Impuls erzeugbar ist;
d) es ist ein System (52) zur Umschaltung des Tastkopfes (40) zwischen schaltender und messender Betriebsart vorhanden.

6. Tastkopf nach einem der Ansprüche 1-5, dadurch gekennzeichnet, daß die Wegmeßsysteme (34,35;24,25;19,20) ein inkrementales Signal liefern.

7. Tastkopf nach einem der Ansprüche 1-5, dadurch gekennzeichnet, daß die Nullagen-Indikatoren opto-elektronische Null-Indikatoren (26,27) sind.

8. Tastkopf nach einem der Ansprüche 1-5, dadurch gekennzeichnet, daß mit dem translatorisch bewegbaren Teil (4) eines torsionssteifen spiel- und reibungsfreien Geradführungssystems (1-5) ein Kardangelenk (7-12) verbunden ist, das den Taststift (14) trägt und daß sowohl mit dem Geradführungssystem (1-5) als auch mit jedem Gelenkteil des Kardangelenks (7-12) ein Wegmeßsystem (19,20;24,25;34,35) und ein Null-Indikator (26,27) verbunden ist.

9. Tastkopf nach Anspruch 8, dadurch gekennzeichnet, daß zusätzlich jeder Koordinatenrichtung Federmittel (22,32,37) zur Dämpfung der Bewegung und zur Gewährleistung eines vorgegebenen Anpreßdruckes der Tastkopfspitze zugeordnet sind.

10. Tastkopf nach Anspruch 9, dadurch gekennzeichnet, daß die Federmittel (22,32,37) eine ab einem Grenzwert der Auslenkung abfallende Kraft-Weg-Kennlinie aufweisen.

## Claims

1. A probe head for coordinate-measuring instruments having a torsionally rigid play-free and friction-free suspension system which defines a spatial coordinate system and carries a probe pin (14) which can be deflected in all three coordinates, characterized by the combination of the following features:
a) a displacement-measuring
system (34, 35; 24, 25; 19, 20) is provided in the probe head (40) for each of the three coordinate directions (x, y, z), each of said systems can produce signals which are proportional to the deflection in the corresponding coordinate direction;
b) each displacement-measuring system is connected to a zero indicator (26, 27) for recognizing the zero position of the involved system;
c) an additional highly sensitive sensor (76) is provided for producing a trigger pulse upon first contact between the object to be measured and the probe pin (14);
d) a system (52) is provided for switching the probe head (40) between the switching mode of operation and the measuring mode of operation.

2. A probe head according to claim 1, characterized by the fact that sensor (76) is connected directly to the probe pin (14).

3. A probe head according to claim 4, characterized by the fact that the sensor (76) is arranged in the vicinity of the tip of the probe.

4. A probe head for coordinate-measuring instruments having a torsionally rigid play-free and friction-free suspension system which defines a spatial coordinate system and carries a probe pin (14) which can be deflected in all three coordinates, characterized by the combination of the following features:
a) a displacement-measuring
system (34, 35; 24, 25; 19, 20) is provided in the probe head (40) for each of the three coordinate directions (x, y, z), each of said systems can produce signals which are proportional to the deflection in the corresponding coordinate direction;
b) each displacement-measuring system is connected to a zero indicator (26, 27) for recognizing the zero position of the involved system;
c1) a comparator is provided for receiving the signals of the zero indicators and for delivering a trigger pulse upon contact between the measuring object and the probe pin.;
c2) a signal for verification of the trigger pulse is developed from the displacement measuring systems;
d) a system (52) is provided for switching the probe head (40) between the switching mode of operation and the measuring mode of operation.

5. A probe head for coordinate-measuring instruments having a torsionally rigid play-free and friction-free suspension system which defines a spatial coordinate system and carries a probe pin (14) which can be deflected in all three coordinates, characterized by the combination of the following features:
a) a displacement-measuring
system (34, 35; 24, 25; 19, 20) is provided in the probe head (40) for each of the three coordinate directions (x, y, z), each of said systems can produce signals which are proportional to the deflection in the corresponding coordinate direction;
b) each displacement-measuring system is connected to a zero indicator (26, 27) for recognizing the zero position of the involved system;
c) additionally a device (53) for measuring the acceleration of the probe pin is provided, which device receives the signals of the displacement measuring systems (19, 20; 24, 25; 34, 35) and produces a trigger pulse, when a predetermined value dv/dt is exceeded upon contact between the object to be measured and the probe pin (14).;
d) a system (52) is provided for switching the probe head (40) between the switching mode of operation and the measuring mode of operation.

6. A probe head according to one of claims 1 - 5, characterizing by the fact that the displacement-measurement systems (34, 35; 24, 25; 19, 20) deliver an incremental signal.

7. A probe head according to one of claims 1 - 5, characterized by the fact that the zero indicators (26, 27) are optoelectronic.

8. A probe head according to one of claims 1 - 5, characterized by the fact that the torsionally rigid play-free and friction-free suspension system comprises one displaceable part (4) which can be moved linear and is connected to a Hooke's joint (7-12) carrying the probe pin (14), and that a displacement-measuring system (19, 20; 24, 25; 34, 35) and a zero indicator (26, 27) are connected to the linear movable part (4) and to each of the pivot axes of the Hooke's joint (7 - 12).

9. A probe head according to claim 8, characterized by the fact that, for each of the coordinate directions, damping-spring means (22, 32, 37) are provided which serve for damping motion and for assuring a predetermined application pressure of the probe pin.

10. A probe head according to claim 9, charcterized by the fact that said damping-spring means (22, 32, 37) have a force-displacement charcteristic which drops off beyond a predetermined limiting value of displacement.

## Revendications

1. Palpeur pour appareils de mesure en coordonnées, comprenant un système à ressorts (1-12) rigide en torsion, sans jeu ni frottement, définissant un système de coordonnées spatiales, qui porte une tige de palpage (14) susceptible d'être déviée suivant les trois directions spatiales, caractérisé par la combinaison des particularités suivantes
a) le palpeur (40) contient, pour chacune des trois directions de coordonnées (x, y, z), un système de mesure de déplacement (34, 35; 24, 25; 19, 20) capable de produire des signaux proportionnels à la déviation dans la direction de coordonnées concernée;
b) un indicateur de zéro (26, 27) pour détecter la position zéro du système est coordonné à chaque système de mesure de déplacement;
c) un capteur (76) supplémentaire, de haute sensibilité, est prévu en plus pour la production d'une impulsion de déclenchement lors du premier contact entre l'objet mesuré et la tige de palpage (14); et
d) un système (52) est prévu pour commuter le palpeur (40) entre un mode de fonctionnement commutateur et un mode de fonctionnement mesureur.

2. Palpeur selon la revendication 1, caractérisé en ce que le capteur pour produire l'impulsion de déclenchement est relié directement à la tige de palpage (14).

3. Palpeur selon la revendication 2, caractérisé en ce que le capteur est disposé à proximité de la pointe du palpeur.

4. Palpeur pour appareils de mesure en coordonnées, comprenant un système à ressorts (1-12) rigide en torsion, sans jeu ni frottement, définissant un système de coordonnées spatiales, qui porte une tige de palpage (14) susceptible d'être déviée suivant les trois directions spatiales, caractérisé par la combinaison des particularités suivantes
a) le palpeur (40) contient, pour chacune des trois directions de coordonnées (x, y, z), un système de mesure de déplacement (34, 35; 24, 25; 19, 20) capable de produire des signaux proportionnels à la déviation dans la direction de coordonnées concernée;
b) un indicateur de zéro (26, 27) pour détecter la position zéro du système est coordonné à chaque système de mesure de déplacement;
c₁) les signaux des indicateurs de zéro sont envoyés à un comparateur par lequel peut être produite une impulsion de déclenchement lors d'un contact entre l'objet mesuré et la tige de palpage;
c₂) un signal pour la vérification de l'impulsion de déclenchement est dérivé des systèmes de mesure de déplacement; et
d) un système (52) est prévu pour commuter le palpeur (40) entre un mode de fonctionnement commutateur et un mode de fonctionnement mesureur.

5. Palpeur pour appareils de mesure en coordonnées, comprenant un système à ressorts (1-12) rigide en torsion, sans jeu ni frottement, définissant un système de coordonnées spatiales, qui porte une tige de palpage (14) susceptible d'être déviée suivant les trois directions spatiales, caractérisé par la combinaison des particularités suivantes
a) le palpeur (40) contient, pour chacune des trois directions de coordonnées (x, y, z), un système de mesure de déplacement (34, 35; 24, 25; 19, 20) capable de produire des signaux proportionnels à la déviation dans la direction de coordonnées concernée;
b) un indicateur de zéro (26, 27) pour détecter la position zéro du système est coordonné à chaque système de mesure de déplacement;
c) un dispositif (53) est prévu en plus pour mesurer l'accélération de la tige de palpage, dispositif auquel sont envoyés les signaux des systèmes de mesure de déplacement (19, 20; 24, 25; 34, 35) et par lequel peut être produite une impulsion de déclenchement en cas de dépassement d'une valeur dv/dt présélectionnée lors d'un contact entre l'objet mesuré et la tige de palpage (14); et
d) un système (52) est prévu pour commuter le palpeur (40) entre un mode de fonctionnement commutateur et un mode de fonctionnement mesureur.

6. Palpeur selon une des revendications 1-5, caractérisé en ce que les systèmes de mesure de déplacement (34, 35; 24, 25; 19, 20) fournissent un signal incrémental.

7. Palpeur selon une des revendications 1-5, caractérisé en ce que les indicateurs de position zéro sont des indicateurs optoélectroniques (26, 27).

8. Palpeur selon une des revendications 1-5, caractérisé en ce qu'un joint universel (7-12) est relié à la partie (4) mobile en translation d'un système de guidage droit (1-5), lequel est rigide en torsion et ne présente pas de jeu ni de frottement, et qu'un système de mesure de déplacement (19, 20; 24, 25; 34, 35) et un indicateur de zéro (26, 27) sont reliés à la fois au système de guidage droit (1-5) et à chaque partie du joint universel (7-12).

9. Palpeur selon la revendication 8, caractérisé en ce que des moyens élastiques (22, 32, 37) pour amortir le mouvement et garantir une pression d'application prédéterminée de la pointe du palpeur sont adjoints en plus pour chaque direction de coordonnées.

10. Palpeur selon la revendication 9, caractérisé en ce que les moyens élastiques (22, 32, 37) présentent une caractéristique force/déplacement décroissante à partir d'une valeur limite de la déviation.
